# EUROPEAN PATENT APPLICATION

(11) **EP 4 614 406 A1**
(43) Date of publication of application: **10.09.2025**
(21) Application number: 23884493.0
(22) Date of filing: 20.09.2023
(51) Int. Cl.: G06N 20/20

(54) **MODEL TRAINING METHOD AND APPARATUS, MODEL TESTING METHOD AND APPARATUS, AND STORAGE MEDIUM**

(30) Priority: 04.11.2022 CN 202211378359
(71) Applicant: Datang Mobile Communications Equipment Co., Ltd., Beijing 100085 (CN)
(72) Inventor: SHU, Min, Beijing 100085 (CN)
(74) Representative: Studio Torta S.p.A.
(86) International application number: PCT/CN2023/120161
(87) International publication number: WO 2024/093561

(57) **Abstract**

The present invention provides a model training method and apparatus, a model testing method and apparatus, and a storage medium. The model training method includes: receiving a training request of a second device of a management service consumer, where the training request carries a training attribute, the training attribute includes: training indication information, the training indication information is used to indicate an association relationship between multiple models and a model generation strategy; and configuring the training attribute in a first device, and jointly training the multiple models to obtain a training result according to the training indication information and multiple model identifiers, where the training result includes a trained fusion model. The present disclosure can realize joint training of the multiple models, obtain better model performance, enhance the intelligence of network operation and maintenance, and improve a management ability of devices in 3GPP.

## Description

The present disclosure claims priority to Chinese Patent Application No. 202211378359.3, filed to China National Intellectual Property Administration on November 04, 2022 and entitled "MODEL TRAINING METHOD AND APPARATUS, MODEL TESTING METHOD AND APPARATUS, AND STORAGE MEDIUM", which is hereby incorporated by reference in its entirety.

### TECHNICAL FIELD

The present disclosure relates to the field of communication, and in particular, to a model training method and apparatus, a model testing method and apparatus, and a storage medium.

### BACKGROUND

3GPP (3rd Generation Partnership Project, 3rd Generation Partnership Project) proposes a service-oriented management architecture in a 5G (5th Generation Mobile Communication Technology, 5th Generation Mobile Communication Technology) management function, which can support an ability to manage multiple objects such as virtualized resources, function features of a single network element, sub-network functions, slice subnets and tenant-oriented slices.

In 3GPP, a traditional method is used to realize the above management ability, and there is a problem of poor management effect.

### SUMMARY

The present disclosure provides a model training method and apparatus, a model testing method and apparatus, and a storage medium to solve the problem of poor management effect when the traditional method is used to realize management tasks in 3GPP.

In a first aspect, the present disclosure provides a model training method, applied to a first device of a management service producer, and including: receiving a training request of a second device of a management service consumer, where the training request carries a training attribute, the training attribute includes: training indication information, the training indication information is used to indicate an association relationship between multiple models and a model generation strategy; and configuring the training attribute in the first device, and jointly training the multiple models to obtain a training result according to the training indication information and multiple model identifiers, where the multiple model identifiers are contained in the training attribute or the multiple model identifiers are generated by the first device, the training result includes a trained fusion model.

Optionally, the training indication information includes: at least one of information to indicate whether to train a fusion model, association information between the multiple models, a multi-model fusion algorithm, a fusion model generation strategy, or a fusion model integration mode.

Optionally, if the training indication information includes the fusion model generation strategy, the fusion model generation strategy includes: at least one of a model initialization mode, the number of model training rounds, a loss function corresponding to a model, or a network structure of the model.

Optionally, if the training indication information includes the fusion model integration mode, the fusion model integration mode includes: at least one of a weighted or direct average method, a voting method, or a learning method.

In a second aspect, the present disclosure provides a model testing method, applied to a third device of a management service producer, and including: receiving a testing request of a fourth device of a management service consumer, where the testing request carries a testing attribute, the testing attribute includes: testing data and testing indication information, the testing indication information is used to indicate an association relationship between multiple models and a model generation strategy; acquiring a fusion model requested for testing according to the testing request; based on the testing indication information, using testing data to test the fusion model to obtain a testing result, where the testing result includes a performance of the fusion model; and sending the testing result to the fourth device.

Optionally, the testing indication information includes: at least one of information to indicate whether to test the fusion model, association information between the multiple models, a multi-model fusion algorithm, a fusion model generation strategy, or a fusion model integration mode.

In a third aspect, the present disclosure provides a model training method, applied to a second device of a management service consumer, and including: generating a training request, where the training request carries a training attribute, the training attribute includes: training indication information, the training indication information is used to indicate an association relationship between multiple models corresponding to multiple model identifiers and a model generation strategy during training of the multiple models, the multiple model identifiers are contained in the training attribute or the multiple model identifiers are generated by a first device; and sending the training request to the first device of a management service producer.

Optionally, the training indication information includes: at least one of information to indicate whether to train a fusion model, association information between the multiple models, a multi-model fusion algorithm, a fusion model generation strategy, or a fusion model integration mode.

Optionally, if the training indication information includes the fusion model generation strategy, the fusion model generation strategy includes: at least one of a model initialization mode, the number of model training rounds, a loss function corresponding to a model, or a network structure of the model.

Optionally, if the training indication information includes the fusion model integration mode, the fusion model integration mode includes: at least one of a weighted or direct average method, a voting method, or a learning method.

In a fourth aspect, the present disclosure provides a model testing method, applied to a fourth device of a management service consumer, where the model testing method includes: generating a testing request, where the testing request carries a testing attribute, and the testing attribute includes: testing data and testing indication information, the testing indication information is used to indicate an association relationship between multiple models and a model generation strategy; sending the testing request to a third device of a management service producer, where the testing request is used to indicate the third device to acquire a fusion model requested for testing; and receiving a testing result sent by the third device, where the testing result includes a performance of the fusion model, the testing result is obtained by the third device using testing data to test the fusion model based on the testing indication information.

Optionally, the testing indication information includes: at least one of information to indicate whether to test the fusion model, association information between the multiple models, a multi-model fusion algorithm, a fusion model generation strategy, or a fusion model integration mode.

In a fifth aspect, the present disclosure provides a model training apparatus, applied to a first device of a management service producer, and including a memory, a transceiver, and a processor:
the memory is configured to store a computer program;
the transceiver is configured to send and receive data under control of the processor;
the processor is configured to read the computer program in the memory and perform the following operations:
   receiving a training request of a second device of a management service consumer, where the training request carries a training attribute, the training attribute includes: training indication information, the training indication information is used to indicate an association relationship between multiple models and a model generation strategy; and
   configuring the training attribute in the first device, and jointly training the multiple models to obtain a training result according to the training indication information and multiple model identifiers, where the multiple model identifiers are contained in the training attribute or the multiple model identifiers are generated by the first device, the training result includes a trained fusion model.

Optionally, the training indication information includes: at least one of information to indicate whether to train a fusion model, association information between the multiple models, a multi-model fusion algorithm, a fusion model generation strategy, or a fusion model integration mode.

Optionally, if the training indication information includes the fusion model generation strategy, the fusion model generation strategy includes: at least one of a model initialization mode, the number of model training rounds, a loss function corresponding to a model, or a network structure of the model.

Optionally, if the training indication information includes the fusion model integration mode, the fusion model integration mode includes: at least one of a weighted or direct average method, a voting method, or a learning method.

In a sixth aspect, the present disclosure provides a model testing apparatus, applied to a third device of a management service producer, and including a memory, a transceiver, and a processor:
the memory is configured to store a computer program;
the transceiver is configured to send and receive data under control of the processor;
the processor is configured to read the computer program in the memory and perform the following operations:
   receiving a testing request of a fourth device of a management service consumer, where the testing request carries a testing attribute, the testing attribute includes: testing data and testing indication information, the testing indication information is used to indicate an association relationship between multiple models and a model generation strategy; acquiring a fusion model requested for testing according to the testing request; based on the testing indication information, using testing data to test the fusion model to obtain a testing result, where the testing result includes a performance of the fusion model; and sending the testing result to the fourth device.

Optionally, the testing indication information includes: at least one of information to indicate whether to test the fusion model, association information between the multiple models, a multi-model fusion algorithm, a fusion model generation strategy, or a fusion model integration mode.

In s seventh aspect, the present disclosure provides a model training apparatus, applied to a second device of a management service consumer, and including:
a generating unit, configured to generate a training request, where the training request carries a training attribute, the training attribute includes: training indication information, the training indication information is used to indicate an association relationship between multiple models corresponding to multiple model identifiers and a model generation strategy during training of the multiple models, the multiple model identifiers are contained in the training attribute or the multiple model identifiers are generated by a first device; and
a sending unit, configured to send the training request to the first device of a management service producer.

Optionally, the training indication information includes: at least one of information to indicate whether to train a fusion model, association information between the multiple models, a multi-model fusion algorithm, a fusion model generation strategy, or a fusion model integration mode.

Optionally, if the training indication information includes the fusion model generation strategy, the fusion model generation strategy includes: at least one of a model initialization mode, the number of model training rounds, a loss function corresponding to a model, or a network structure of the model.

Optionally, if the training indication information includes the fusion model integration mode, the fusion model integration mode includes: at least one of a weighted or direct average method, a voting method, or a learning method.

In an eighth aspect, the present disclosure provides a model testing apparatus, applied to a fourth device of a management service consumer, and including:
a generating unit, configured to generate a testing request, where the testing request carries a testing attribute, the testing attribute includes: testing data and testing indication information, the testing indication information is used to indicate an association relationship between multiple models and a model generation strategy;
a sending unit, configured to send the testing request to a third device of a management service producer, where the testing request is used to indicate the third device to acquire a fusion model requested for testing; and
a receiving unit, configured to receive a testing result sent by the third device, where the testing result includes a performance of the fusion model, the testing result is obtained by the third device using testing data to test the fusion model based on the testing indication information.

Optionally, the testing indication information includes: at least one of information to indicate whether to test the fusion model, association information between the multiple models, a multi-model fusion algorithm, a fusion model generation strategy, or a fusion model integration mode.

In a ninth aspect, the present disclosure provides a processor-readable storage medium, where the processor-readable storage medium stores a computer program, the computer program is used to enable a processor to perform the model training method of the first aspect or third aspect, or the model testing method of the second aspect or the fourth aspect.

In a tenth aspect, the present disclosure provides a computer program product containing instructions, where when the instructions run on a computer, the computer is enabled to perform the model training method of the first aspect or the third aspect, or the model testing method of the second aspect or the fourth aspect, as described above.

In an eleventh aspect, the present disclosure provides a communication system, including any one of the first device and any one of the second device, or including any one of the third device or the fourth device.

The model training method and apparatus, the model testing method and apparatus, and a storage medium provided by the present disclosure, by receiving a training request of a second device of a management service consumer, where the training request carries a training attribute, the training attribute includes: training indication information, the training indication information is used to indicate an association relationship between multiple models and a model generation strategy; and configuring the training attribute in the first device, and jointly training the multiple models to obtain a training result according to the training indication information and multiple model identifiers, where the multiple model identifiers are contained in the training attribute or the multiple model identifiers are generated by the first device, the training result includes a trained fusion model, can realize joint training of the multiple models, obtain better model performance, enhance the intelligence of network operation and maintenance, and improve a management ability of devices in 3GPP.

It should be understood that contents are described in the above invention content section is not intended to define key or significant features of embodiments of the present disclosure, nor is it intended to limit the scope of the present disclosure. Other features of the present disclosure will be made easier to understand by the following descriptions.

### BRIEF DESCRIPTION OF DRAWINGS

In order to more clearly illustrate the technical scheme of the present disclosure or the prior art, a brief description of the drawings required to be used in the embodiments or the description of the prior art is presented below. It is obvious that the drawings in the description below are embodiments of the present disclosure. For ordinary technical personnel in the field, other drawings can be obtained according to these drawings without any creative labor.
FIG. 1 is a schematic diagram of an application scenario of a model training method provided by an embodiment of the present disclosure.
FIG. 2 is a flow diagram of a model training method provided by an embodiment of the present disclosure.
FIG. 3 is a flow diagram of a model training method provided by another embodiment of the present disclosure.
FIG. 4 is a schematic diagram of an application scenario of a model testing method provided by an embodiment of the present disclosure.
FIG. 5 is a flow diagram of a model testing method provided by an embodiment of the present disclosure.
FIG. 6 is a flow diagram of a model testing method provided by another embodiment of the present disclosure.
FIG. 7 is a structural diagram of a model training apparatus provided by an embodiment of the present disclosure.
FIG. 8 is a structural diagram of a model testing apparatus provided by an embodiment of the present disclosure.
FIG. 9 is a structural diagram of a model training apparatus provided by another embodiment of the present disclosure.
FIG. 10 is a structural diagram of a model testing apparatus provided by another embodiment of the present disclosure.

### DESCRIPTION OF EMBODIMENTS

In the present disclosure, "at least one" means one or more, and "multiple" means two or more. "And/or" describes an association relationship of associated objects, representing that there can be three kinds of relations, for example, A and/or B, can represent: A exists alone, A and B exist simultaneously, B exists alone, where A and B can be singular or plural. The character "/" generally represents that a relationship between contextual associated objects is an "or" relationship. "At least one of the following", or similar expressions thereof, means any combination of such terms, including any combination of monomial or complex terms. For example, at least one of the terms a, b, or c can be represented as: a, b, c, a-b, a-c, b-c, or a-b-c, where a, b, c can be single or multiple.

It is understood that each step or operation in embodiments of the present disclosure is only an example and that the embodiments of the present disclosure may also perform other operations or variations of various operations. In addition, each step may be performed in a different order as presented in the embodiments of the present disclosure and may not be intended to perform all operations in the embodiments of the present disclosure.

The following is a clear and complete description of the technical scheme in the embodiment of the present disclosure in conjunction with drawings attached to the embodiments of the present disclosure. Obviously, the described embodiments are only a part of embodiments of the present disclosure and not all embodiments. Based on the embodiments in the present disclosure, all other embodiments obtained by a person of ordinary skill in the field without creative labor fall within the scope of protection of the present disclosure.

The technical scheme provided by the embodiments of the present disclosure can be applied to a variety of systems, especially 5G systems. For example, applicable systems can be a global system of mobile communication (global system of mobile communication, GSM) system, code division multiple access (code division multiple access, CDMA) system, wideband code division multiple access (Wideband Code Division Multiple Access, WCDMA) general packet radio service (general packet radio service, GPRS) system, long term evolution (long term evolution, LTE) system, LTE frequency division duplex (frequency division duplex, FDD) system, LTE time division duplex (time division duplex, TDD) system, long term evolution advanced (long term evolution advanced, LTE-A) system, universal mobile telecommunication system (universal mobile telecommunication system, UMTS) system, worldwide interoperability for microwave access (worldwide interoperability for microwave access, WiMAX) system, 5G New Radio (New Radio, NR) system, etc. These systems include terminal devices, or network devices. The systems can also include a core network part, such as an evolved packet system (Evloved Packet System, EPS), 5G system (5GS), etc.

A second device and a fourth device to which the embodiment of the present disclosure relates may be terminal devices, specifically devices that provide voice and/or data connectivity to a user, handheld devices with wireless connectivity capabilities, or other processing devices connected to a wireless modem, etc. In different systems, a name of the terminal device may also be different. For example, in a 5G system, the terminal device may be called a user equipment (User Equipment, UE). A wireless terminal device may communicate with one or more core networks (Core network, CN) via a radio access network (Radio Access Network, RAN). The wireless terminal device may be a mobile terminal device, such as a mobile telephone (or "cellular" telephone) and a computer with a mobile terminal device. For example, it can be a portable, pocket, handheld, computer built in, or vehicle-mounted mobile apparatus that exchanges language and/or data with a wireless access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. A wireless terminal device can also be called a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent), and user device (user device) are not limited in the embodiments of the present disclosure.

A first device/third device to which the embodiments of the present disclosure relate is a network device, which may, for example, be a base station, the base station may include a plurality of cells providing services to the terminal device. According to different specific applications, the base station can also be called an access point, or it can be a device in the access network that communicates with the wireless terminal device through one or more sectors on an air interface, or some other name. The network device may be used to exchange received air frames with Internet Protocol (Internet Protocol, IP) packets, acting as a router between the wireless terminal device and the rest of the access network. The access network may include the Internet Protocol (IP) communication network. The network device can also coordinate property management of the air interface. For example, the network device involved in the embodiments of the present disclosure may be a network device (Base Transceiver Station, BTS) in global system for mobile communications (Global System for Mobile communications, GSM) or code division multiple access (Code Division Multiple Access, CDMA), or a network device (NodeB) in wide-band code division multiple access (Wide-band Code Division Multiple Access, WCDMA). It can also be evolutional network device (evolutional NodeB, eNB or e-NodeB) in a long term evolution (long term evolution, LTE) system, 5G base station (gNB) in a 5G network architecture (next generation system). It can also be home evolved Node B (Home evolved Node B, HeNB), relay node (relay node), femto (femto), pico (pico), etc., which is not limited in the embodiments of the present disclosure. In some network architectures, the network device may include a centralized unit (centralized unit, CU) node and a distributed unit (distributed unit, DU) node, and the centralized unit and distributed unit may also be geographically separated.

The network device and the terminal device can each use one or more antennas for multi input multi output (Multi Input Multi Output, MIMO) transmission. The MIMO transmission can be single user MIMO (Single User MIMO, SU-MIMO) or multiple user MIMO (Multiple User MIMO, MU-MIMO). According to shape and number of root antenna combinations, the MIMO transmission can be 2D-MIMO, 3D-MIMO, FD-MIMO or massive MIMO, and can also be diversity transmission or pre-coded transmission or beamforming transmission.

In order to better understand the scheme, an AL/ML (artificial intelligence/machine learning) entity, management service and existing problems of prior art involved in the scheme are briefly described as follows.
(1) AL/ML entity: means any entity that belongs to an AI/ML model or contains an AI/ML model and can be managed as a single composite entity.
(2) Management Service (Management Service, MS for short): management of telecom network standards has always been adapted a management architecture pattern of combination of NM (Network Management, Network Management) and EM (Element Management, Element Management). EM implements a management function of a single device vendor, and NM implements the multi-vendor management function at an operator level. NM and EM are interconnected through a standardized northbound interface Itf-N, a purpose of that NM can manage and monitor multi-vendor networks is achieved. 3GPP proposes a service-oriented management architecture in the 5G management function, which can support an ability to manage multiple objects such as virtualized resources, function features of a single network element, sub-network functions, slice subnets and tenant-oriented slices. A service-oriented architecture consists of management functions and management services. A carrier of the management service is the management function, and one management function can provide multiple management services.
   Different from a previous fixed standardized architecture that defines a standardized interface between the two functional modules, the service-oriented architecture will define the management service and an interface to access the management service on standard, and define a possible consumer of the management service and a producer of the management service. The management service has three related components: a service management interface, a service management object model, and service management data.
(3) Technical problem

With the more dynamic demand changes of the 5G network and the support of diversified services, the network is becoming more and more complex, requirements of service quality and operation and maintenance costs are becoming higher and higher, and it is urgent to combine mobile communication technology with automation/intelligent technology including artificial intelligence to improve an intelligent level of the mobile communication network.

The AI/ML model is being used in 5G in more and more areas to enable management capabilities and/or orchestration capabilities. AI/ML model training in eMDA (Management Data Analysis) work being processed has been studied in 3GPP specification work. Due to the complexity of communication systems, for some predictive modeling problems, the structure of the problem itself may suggest the use of multiple models. However, current model training and testing only consider a scenario of single model prediction and analysis, and do not consider a case of combining prediction and analysis of multiple contributing models.

When existing standard performs model training in the first device of a management service producer, configured parameters are shown in Table 1, where these configured parameters are from a training request of the second device of the management service producer, and are used to indicate the training of a single model.

**Table 1**

| Training attribute | Whether it is mandatory | Whether it is readable | Whether it is optional | Whether it is invariant | Whether a change is notified to the second device |
|---|---|---|---|---|---|
| Model identifier | M | T | T | F | T |
| Training data source | O | T | T | F | T |
| Data quality score | O | T | T | F | T |
| Training request source | M | T | T | F | T |
| Request state | M | T | T | F | T |
| Expected run-time context | O | T | T | F | T |
| Performance requirement | M | T | T | F | T |
| Cancel request | O | T | T | F | T |
| Suspending request | O | T | T | F | T |
| Training result is associated with the training request | | | | | |

In Table 1, M represents that it is mandatory, O represents optional, T represents yes, and F represents no. In addition, only one model identifier is included in Table 1, that is, only a single model can be trained in the current standard, but a trained single model will lead to poor service management ability. Further, in Table 1, each training request can indicate the "expected run-time context", the attribute of the "expected run-time context" describes specific conditions for which the AI/ML entity should be trained. While 3GPP defines some possible specific conditions, the standard is not perfect here, nor does it allow for a scenario where multiple models are trained and tested jointly.

Specifically, for a given use case, different AI/ML entities apply their own ML (machine learning) models in an AI/ML inference function to meet different inference demands and functions. However, in some cases, one function enabled by the AI/ML, such as a RAN (radio access network, radio access network) side inference function, may contain multiple AI/ML entities, where one AI/ML entity can only implement a specific function. An analytical output of one AI/ML entity may serve as an input of the next AI/ML entity. For example, an ordered model chain can be trained and created, such as regression or classification models, where a first model's prediction outputs a first output target value, the output target value can be used as part of the input to a second model in the model chain to predict a second output target value of the second model, and so on. For example, an output of an Inter-gNB (next generation base station) beam selection optimization model (the first model) can be used as an input of a switching optimization analysis model (the second model), and the output of the switching optimization analysis model can be used as a final output. In addition, there are also cases where an output result of multiple models used for voting or finding average is taken as a final output.

However, the existing standard is only for training, testing and verification of a single AI/ML entity. When one model inference function requires multiple models to jointly complete a corresponding inference task, the model training and model testing methods in the existing standard cannot achieve better model performance and generalization performance, thus affecting the management ability of a device in 3GPP.

To solve the above problems, embodiments of the present disclosure provide a model training method and apparatus, a model testing method and apparatus, and a storage medium. In the method, by adding training indication information to a training attribute, joint training for indicating multiple models can be realized to obtain a fusion model, and the management capability of the device in 3GPP can be improved.

The method and the apparatus are based on the same application concept, since a principle of the method and apparatus solving a problem is similar, implementation of the apparatus and method can be referred to each other, the repetition is not repeated.

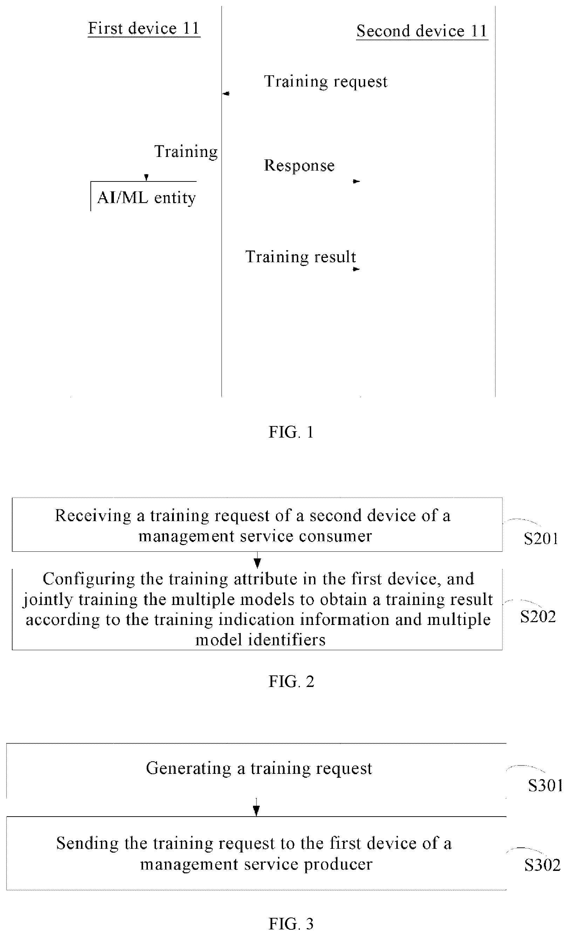

Refer to FIG. 1, FIG. 1 is a schematic diagram of an application scenario provided by an embodiment of the present disclosure. As shown in FIG. 1, it includes a first device 11 of a management service producer and a second device 12 of a management service consumer, where an AI/ML entity (model) is tested in the first device 11, the first device 11 receives a training request sent by the second device 12, trains a fusion model based on the training request after returning a response to the second device 12, and sends a training result to the second device 12 after the training.

Refer to FIG. 2, FIG. 2 is a flow diagram of a model training method provided by an embodiment of the present disclosure, a first device of a management service producer in the method Specifically includes a processing circuit coupled to a memory, the processing circuit is configured to perform the following steps to implement MDA (Management Data Analytics, Management data analysis) ability. As shown in FIG. 2, the model training method of the embodiment may include:
S201, receiving a training request of a second device of a management service consumer.

The training request carries a training attribute, the training attribute includes: training indication information, the training indication information is used to indicate an association relationship between multiple models and a model generation strategy.

In an embodiment, multiple model identifiers are contained in the training attribute. Specifically, referring to Table 1 and Table 2, the embodiment of the present disclosure mainly improves the model identifier in Table 1 into multiple model identifiers (at least two model identifiers), and adds the training indication information to indicate the first device to conduct joint training for multiple models to obtain a fusion model. The training indication information is used to enhance training effect of the fusion model. Table 2 is as follows:

**Table 2**

| Training attribute | Whether it is mandatory | Whether it is readable | Whether it is optional | Whether it is invariant | Whether a change is notified to the second device |
|---|---|---|---|---|---|
| One or multiple model identifiers | M | T | T | F | T |
| Training data source | O | T | T | F | T |
| Data quality score | O | T | T | F | T |
| Training request source | M | T | T | F | T |
| Request state | M | T | T | F | T |
| Expected run-time context | O | T | T | F | T |
| Performance requirement | M | T | T | F | T |
| Cancel request | O | T | T | F | T |
| Suspending request | O | T | T | F | T |
| Whether to train a fusion model | CO | T | F | F | T |
| Association information between the multiple models | CO | T | F | F | T |
| Multi-model fusion algorithm | CO | T | F | F | T |
| Fusion model generation strategy | CO | T | F | F | T |
| Fusion model integration mode | CO | T | F | F | T |
| Training result is associated with the training request | | | | | |

The same attribute names in Table 2 and Table 1 have corresponding explanations in the 3GPP standard, and will not be repeated here. In addition, CO (Conditional Optional) in Table 2 represents that it is optional under certain conditions. If only a single AI/ML entity is trained, a model identifier can be configured, and the corresponding training indication information section can be left unconfigured. If the fusion model is trained, multiple model identifiers can be configured and corresponding training indication information can be configured.

In an embodiment, the multiple model identifiers are generated by the first device.

Further, the training indication information includes: at least one of information to indicate whether to train a fusion model, association information between the multiple models, a multi-model fusion algorithm, a fusion model generation strategy, or a fusion model integration mode.

In an optional embodiment, the training indication information may also include a fusion identifier, that is, an identifier for configuring a fusion model obtained by training. In the embodiment of the present disclosure, the model identifier may also be referred to as an entity identifier, and each entity is a model. Each AI/ML entity contains a model, and corresponds to a model identifier, and the fusion model obtained by training includes multiple AI/ML entities with fusion identifier.

In the embodiment of the present disclosure, the association information between the multiple models is used to indicate a sequential order of the training of the multiple models and the corresponding algorithm used for each model.

The multi-model fusion algorithm is specifically an algorithm list, including multiple algorithms, such as Bagging (guided aggregation algorithm), Stacking (stacking algorithm), Adaboost (iterative algorithm), random forest, etc.

The association information between the multiple models includes a model identifier list corresponding to the algorithm list, for example, a model identifier A corresponds to Bagging, a model identifier B corresponds to Stacking, a model identifier C corresponds to Adaboost, and a model identifier D corresponds to random forest.

Further, if the training indication information includes the fusion model generation strategy, the fusion model generation strategy includes: at least one of a model initialization mode, the number of model training rounds, a loss function corresponding to a model, or a network structure of the model.

The model initialization mode includes: different initialization methods of each model during each training. For example, three models, namely model A, model B, and model C, are jointly trained. Three groups of training data are used to train model A. A first group of training data is used to train model A with a first initialization method, a second group of training data is used to train model A with a second initialization method, and a third group of training data is used to train model A with a third initialization method. The initialization is to use an initialization function to initialize model parameters. The number of training rounds of the model refers to the number of training rounds of each group of data. For example, for model A, the first group of training data is used to trained it for 10 rounds, the second group of training data is used to trained it for 10 rounds, and the third group of training data is used to trained it for 10 rounds. The loss function corresponding to the model refers to a loss function used by each model in a training process, such as a loss function loss function *a* used by model A, a loss function loss function *b* used by model B, and a loss function loss function c used by model C. Network structure is the number of network layers for example.

Further, if the training indication information includes the fusion model integration mode, the fusion model integration mode includes: at least one of a weighted or direct average method, a voting method, or a learning method. The weighted average method refers to a weighted average calculation of an output of each model as an output of the fusion model. For example, the fusion model obtained by training includes model A, model B, and model C. First training data is input to model A, model B and model C respectively to correspondingly obtain a prediction result x, prediction result y and prediction result *z* respectively. A result obtained by performing weighted average of the prediction result x, prediction result y and prediction result *z* is a final output result of the fusion model. The direct average method is to find a sum of the prediction result x, prediction result y and prediction result *z*, and then divide the sum by 3, which is the final output result of the fusion model. The voting method refers to a selection of maximum, minimum or intermediate value in the prediction result *x*, prediction result *y* and prediction result *z* as the final output result of the fusion model. The learning method refers to that the prediction result *x*, prediction result *y* and prediction result *z* are input into another learning model D, and an output result of D is taken as the final output of the fusion model. In the embodiment of the present disclosure, the above are illustrative only, and the present disclosure does not limit the integration mode of the fusion model.

In the embodiment of the present disclosure, the above training attribute is sent by the second device to the first device, the second device is a terminal device for example, and a personnel can use the terminal device to send the training request to the first device to indicate the first device to train the fusion model.

S202: configuring the training attribute in the first device, and jointly training the multiple models to obtain a training result according to the training indication information and multiple model identifiers.

Specifically, the training attribute is configured in a service management interface of the first device. The model training in the present disclosure is carried out in the first device, which can have element management, such as OMC-R (network element) that manages the base station or a higher level of network management to provide the service, or the management service can be co-located with the network element. For example, the training of the AI/ML model on the RAN side requires OAM (Operation Administration and Maintenance, Operation Administration and Maintenance) to provide training service support, and OAM can achieve management functions, which can be set in the base station or outside the base station.

In the embodiment of the present disclosure, the management service can acquire original network data of a managed network and service from a network function of the managed network and service, and then train the fusion model. One or more second devices can send the training request to the first device, and the training request needs to carry the above training attribute. Then the first device determines whether it meets a training requirement of the training attribute according to its own resource and an analysis of training attribute. If the first device can train the fusion model, it is able to perform training in response to the training request of the second device; and if the first device cannot train the fusion model, it is unable to perform training in response to the training request of the second device.

Further, if the first device can train the fusion model, the training attribute is configured in an interface of management service corresponding to the first device to train the fusion model. Firstly, a data sample is acquired through a training data source configured in the training attribute, and the data sample is divided into a training set and a testing set. Then the training set is used to train the fusion model, and the testing set is used to test the trained fusion model. In addition, what can be indicated by the training attribute is the training of the fusion model, the training of the fusion model can be started by selecting a corresponding algorithm multi-model fusion algorithm, model data source, fusion model generation strategy and fusion model integration mode.

The training result includes the trained fusion model. In addition, the training result includes a training report of the fusion model, the training report includes a performance of the fusion model, such as confidence, which is used to represent a confidence of the AI/ML model when reasoning on data with the same distribution as the training data.

In the embodiment of the present disclosure, under a distributed training pattern, that is, there are multiple requests, all relevant training processes corresponding to multi-model joint training can be indexed by the fusion identifier.

Further, the training report can be sent to the second device, so that the second device can know the training result of the fusion model. Referring to Table 3, which is contents included in the training report, where CM (Conditional Mandatory) represents that it is mandatory under certain conditions.

**Table 3**

| Report attribute | Whether it is mandatory | Whether it is readable | Whether it is optional | Whether it is invariant | Whether a change is notified to the second device |
|---|---|---|---|---|---|
| One or multiple model identifiers | M | T | F | F | T |
| Whether training data provided by the second device is used | M | T | F | F | T |
| Use of the second device to provide training data | CM | T | F | F | T |
| Confidence | O | T | F | F | T |
| Model performance of training | CM | T | F | F | T |
| Whether new training data is used | CO | T | F | F | T |
| Training request parameter | CM | T | F | F | T |
| Training process parameter | M | T | F | F | T |
| Last training parameter | CM | T | F | F | T |

Further, in the embodiment of the present disclosure, the trained fusion model can be configured in a network element device, such as a base station, switch, and router, to achieve the management capability of the corresponding network element device.

In the embodiment of the present disclosure, network data of the managed network and service can be acquired from the network function (NF) of the managed network and service, and the network data can be used as training data. According to the training indication information of the training fusion model, different multi-model fusion algorithms and strategies are selected to conduct joint training of the fusion model, and the fusion model is obtained. The fusion model can improve the service capability of the corresponding device.

Refer to FIG. 3, FIG. 3 is a flow diagram of a model training method provided by another embodiment of the present disclosure, the method is applied to a second device of a management service consumer and includes the following steps:
S301, generating a training request.

The training request carries a training attribute, the training attribute includes: training indication information, the training indication information is used to indicate an association relationship between multiple models corresponding to multiple model identifiers and a model generation strategy during training of the multiple models, the multiple model identifiers are contained in the training attribute or the multiple model identifiers are generated by a first device.

S302, sending the training request to the first device of a management service producer.

The sending the training request to the first device of the management service producer can instruct the first device to train the fusion model based on the training request.

In the embodiment of the present disclosure, the realization principle and technical effect of the model training method applied to the second device of the management service consumer can be referred to the above embodiments and will not be repeated here.

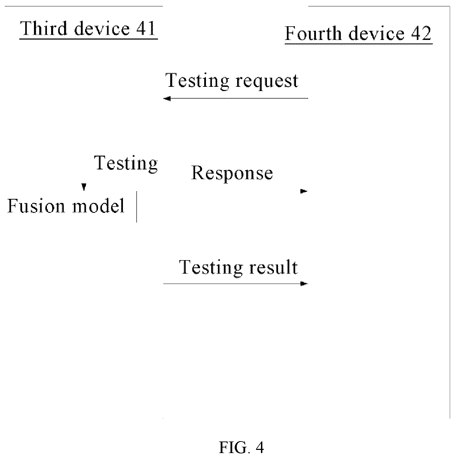

In addition, the trained fusion model needs to be tested, as shown in FIG. 4, including a third device 41 of the management service producer and a fourth device 42 of the management service consumer. The AI/ML entity (model) is tested in the third device 41. The third device 41 receives a testing request sent by the fourth device 42, tests the fusion model based on the testing request after returning a response to the fourth device 42, and sends a testing result to the fourth device 42 after the test. In the embodiment of the present disclosure, the third device is a network device different from the first device, the first device is a device configured for training the fusion model, the third device is a device that can use the fusion model, and the fourth device and the second device may be the same or different.

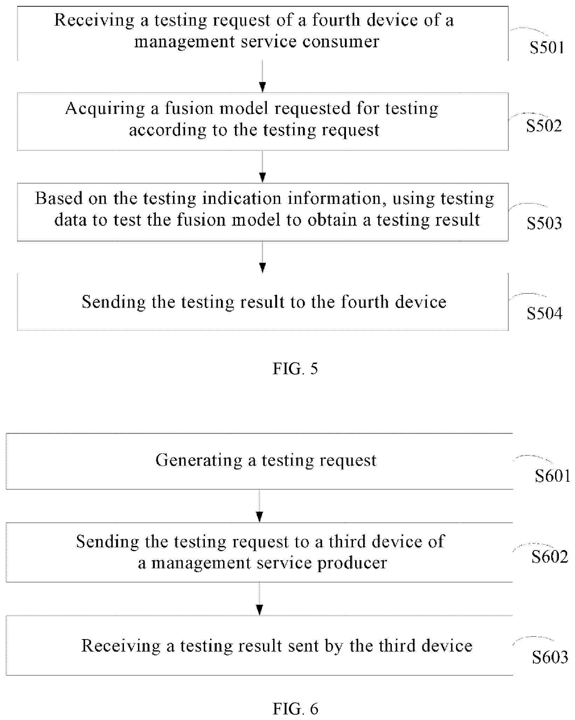

Specifically, refer to FIG. 5, which is a flow diagram of a model testing method provided by an embodiment of the present disclosure, the method is applied to a third device of a management service producer. Specifically, the third device includes a processing circuit coupled to a memory, the processing circuit is configured to perform the following steps to implement MDA (Management Data Analytics, Management data analysis) ability. As shown in FIG. 5, the model testing method of the embodiment may include:
S501, receiving a testing request of a fourth device of a management service consumer.

The testing request carries a testing attribute, the testing attribute includes: testing data and testing indication information, the testing indication information is used to indicate an association relationship between multiple models and a model generation strategy. Specifically.

Specifically, the testing indication information includes: at least one of information to indicate whether to test the fusion model, association information between the multiple models, a multi-model fusion algorithm, a fusion model generation strategy, or a fusion model integration mode.

Specific contents of whether to test the fusion model, the association information between the multiple models, the multi-model fusion algorithm, the fusion model generation strategy, and the fusion model integration mode are referred to the above embodiments of the training process, and will not be repeated here.

In the embodiment of the present disclosure, the testing data may also be a testing data set acquired by the third device from a data source, and data, which is sent by the fourth device that has the same feature distribution as this testing data set, is used as the testing data of the fusion model.

S502, acquiring a fusion model requested for testing according to the testing request.

The testing request includes a fusion identifier of the fusion model, so that the fusion model to be tested can be determined according to the testing request, and the fusion model can be obtained by training using the above model training method.

In addition, the third device determines whether it meets a testing requirement of the testing attribute according to its own resource and an analysis of training attribute. If the third device can test the fusion model, it is able to perform testing in response to the testing request of the fourth device; if the third device cannot test the fusion model, and it is unable to perform testing in response to the training request of the fourth device.

S503, based on the testing indication information, using testing data to test the fusion model to obtain a testing result.

Before testing, the present disclosure configures the testing attribute on a management service interface of the third device to facilitate testing for the fusion model.

The testing indication information indicates the multi-model fusion algorithm of the multiple models, the fusion model generation strategy, the fusion model integration mode, etc. Therefore, the testing data can be input into the fusion model, to enable the fusion model to process the testing data according to the testing indication information to obtain the testing result.

Specifically, if the third device can test the fusion model, relevant testing indication information is selected, the testing data is input into the fusion model, a prediction result of the fusion model output is obtained, and a loss value of the prediction result and a truth result is calculated using a preset loss function, so as to determine the performance of the fusion model.

Further, after testing the fusion model, the testing result can be generated. The testing result includes the performance of the fusion model, for example, recall rate, receiver operating characteristic curve (ROC-AUC) of a classification model, or confidence.

S504, sending the testing result to the fourth device.

In the embodiment of the present disclosure, an integrated model is tested according to the fusion algorithm and strategy to obtain the testing result, and an evaluation indicator of the model is obtained through evaluation methods such as a performance indicator and a confidence.

Further, the present disclosure can put the fusion model the testing result of which indicates that the testing has been passed on line to the corresponding network element device for use.

In summary, in the communication system, based on the fusion model of multi-model j oint training and the fusion model of multi-model j oint testing, the present disclosure can use the fusion model to process network data, which can significantly improve the prediction and generalization ability of the model, so as to acquire better network performance in the network intelligent and network autonomous system.

Refer to FIG. 6, FIG. 6 is a flow diagram of a model testing method provided by another embodiment of the present disclosure, the method is applied to a fourth device of a management service consumer. As shown in FIG. 6, the model testing method of the embodiment may include:
S601, generating a testing request.

The testing request carries a testing attribute, and the testing attribute includes: testing data and testing indication information, the testing indication information is used to indicate an association relationship between multiple models and a model generation strategy.

The testing indication information includes: at least one of information to indicate whether to test the fusion model, association information between the multiple models, a multi-model fusion algorithm, a fusion model generation strategy, or a fusion model integration mode.

S602, sending the testing request to a third device of a management service producer.

The testing request is used to indicate the third device to acquire a fusion model requested for testing.

S603, receiving a testing result sent by the third device.

The testing result includes a performance of the fusion model, the testing result is obtained by the third device using testing data to test the fusion model based on the testing indication information.

The implementation principles and technical effects of S601 to S603 can be referred to the above-mentioned embodiments, and will not be repeated.

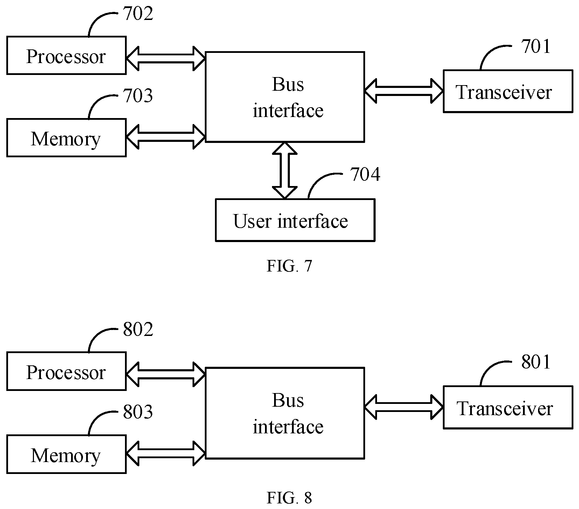

An embodiment of the present disclosure provides a model training apparatus, and the model training apparatus of the embodiment may be a first device. As shown in FIG. 7, the model training apparatus may include a transceiver 701, a processor 702, and a memory 703.

The transceiver 701is configured to receive and send data under control of the processor 702.

In FIG. 7, a bus architecture may include any number of interconnected buses and Bridges, specifically, various circuits of one or more processors represented by the processor 702 and memory represented by the memory 703 are linked together. The bus architecture can also link together various other circuits, such as peripherals, voltage regulators, and power management circuits, which are well known in the field and are therefore not described further in this article. A bus interface provides an interface. The transceiver 701 may be a plurality of elements, that is, including a transmitter and a receiver, providing a unit for communication with various other devices on transmission mediums, these transmission mediums include, such transmission mediums include wireless channels, wired channels, optical cables and other transmission mediums. Optionally, the model training apparatus may also include a user interface 704, the user interface 704 may also be an interface capable of external and internal connection of required devices for different user devices, a connected device includes but not limited to keypads, displays, speakers, microphones, joysticks, etc.

The processor 702 is responsible for managing the bus architecture and general processing, and the memory 703 can store the data used by the processor 702 when performing operations.

Optionally, the processor 702 can be a central processing unit (central processing unit, CPU), application specific integrated circuit (Application Specific Integrated Circuit, ASIC), field-programmable gate array (Field-Programmable Gate Array, FPGA), or Complex Programmable Logic Device (Complex Programmable Logic Device, CPLD), the processor 702 can also use a multi-core architecture.

The processor 702, by invoking a computer program stored in the memory 703, is configured to execute any one of the methods of the first device provided by the embodiment of the present disclosure in accordance with executable instructions obtained. The processor and memory can also be physically separated.

Specifically, the processor 702 is configured to following operations: receiving a training request of a second device of a management service consumer, where the training request carries a training attribute, the training attribute includes: training indication information, the training indication information is used to indicate an association relationship between multiple models and a model generation strategy; and configuring the training attribute in the first device, and jointly training the multiple models to obtain a training result according to the training indication information and multiple model identifiers, where the multiple model identifiers are contained in the training attribute or the multiple model identifiers are generated by the first device, the training result includes a trained fusion model.

Optionally, the training indication information includes: at least one of information to indicate whether to train a fusion model, association information between the multiple models, a multi-model fusion algorithm, a fusion model generation strategy, or a fusion model integration mode.

Optionally, if the training indication information includes the fusion model generation strategy, the fusion model generation strategy includes: at least one of a model initialization mode, the number of model training rounds, a loss function corresponding to a model, or a network structure of the model.

Optionally, if the training indication information includes the fusion model integration mode, the fusion model integration mode includes: at least one of a weighted or direct average method, a voting method, or a learning method.

It should be noted here that the apparatus provided in the present disclosure can realize all the method steps implemented by the first device in the method embodiments above and can achieve the same technical effect, and parts and beneficial effects in the embodiment of the present disclosure which is the same of the method embodiments will not be detailed here.

On a network side, an embodiment of the present disclosure provides a model testing apparatus, and the model training apparatus of the embodiment may be a third device. As shown in FIG. 8, the model testing apparatus may include a transceiver 801, a processor 802, and a memory 803.

The transceiver 801 is configured to receive and send data under control of the processor 802.

In FIG. 8, a bus architecture may include any number of interconnected buses and Bridges, specifically, various circuits of one or more processors represented by the processor 802 and memory represented by the memory 803 are linked together. The bus architecture can also link together various other circuits, such as peripherals, voltage regulators, and power management circuits, which are well known in the field and are therefore not described further in this article. A bus interface provides an interface. The transceiver 801 may be a plurality of elements, that is, including a transmitter and a receiver, providing a unit for communication with various other devices on transmission mediums, such transmission mediums include wireless channels, wired channels, optical cables and other transmission mediums. The processor 802 is responsible for managing the bus architecture and general processing, and the memory 803 can store the data used by the processor 802 when performing operations.

The processor 802 can be a CPU, ASIC, FPGA, or CPLD, and the processor can also use a multi-core architecture.

The processor 802, by invoking a computer program stored in the memory 803, is configured to execute any one of the methods of the network device provided by the embodiment of the present disclosure in accordance with executable instructions obtained. The processor and memory can also be physically separated.

Specifically, the processor 802 is configured to perform the following operations: receiving a testing request of a fourth device of a management service consumer, where the testing request carries a testing attribute, the testing attribute includes: testing data and testing indication information, the testing indication information is used to indicate an association relationship between multiple models and a model generation strategy; acquiring a fusion model requested for testing according to the testing request; based on the testing indication information, using testing data to test the fusion model to obtain a testing result, where the testing result includes a performance of the fusion model; and sending the testing result to the fourth device.

Optionally, the testing indication information includes: at least one of information to indicate whether to test the fusion model, association information between the multiple models, a multi-model fusion algorithm, a fusion model generation strategy, or a fusion model integration mode.

It should be noted here that the above apparatus provided by the present disclosure can implement all the method steps implemented by the third device in the method embodiments above, and can achieve the same technical effect, and parts and beneficial effects in the embodiment of the present disclosure which is the same of the method embodiments will not be detailed here.

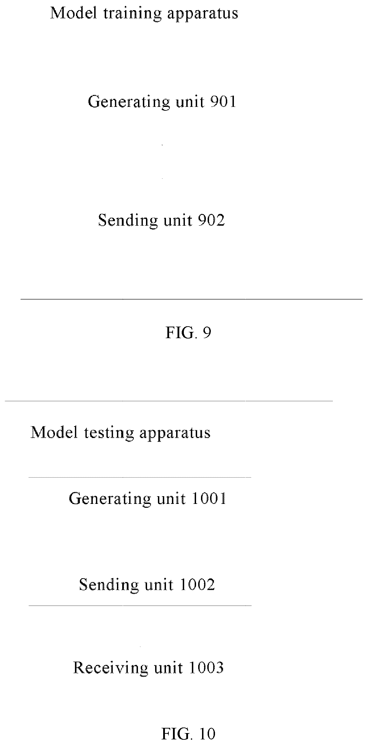

An embodiment of the present disclosure provides a model training apparatus, the model training apparatus of the present disclosure may be a second device. As shown in FIG. 9, the model training apparatus can include: a generating unit 901 and a sending unit 902.

The generating unit 901 is configured to generate a training request, where the training request carries a training attribute, the training attribute includes: training indication information, the training indication information is used to indicate an association relationship between multiple models corresponding to multiple model identifiers and a model generation strategy during training of the multiple models, the multiple model identifiers are contained in the training attribute or the multiple model identifiers are generated by a first device.

The sending unit 902 is configured to send the training request to the first device of a management service producer.

Optionally, the training indication information includes: at least one of information to indicate whether to train a fusion model, association information between the multiple models, a multi-model fusion algorithm, a fusion model generation strategy, or a fusion model integration mode.

Optionally, if the training indication information includes the fusion model generation strategy, the fusion model generation strategy includes: at least one of a model initialization mode, the number of model training rounds, a loss function corresponding to a model, or a network structure of the model.

Optionally, if the training indication information includes the fusion model integration mode, the fusion model integration mode includes: at least one of a weighted or direct average method, a voting method, or a learning method.

It should be noted here that the above apparatus provided by the present disclosure can implement all the method steps implemented by the second device in the method embodiments above, and can achieve the same technical effect, and parts and beneficial effects in the embodiment of the present disclosure which is the same of the method embodiments will not be detailed here.

An embodiment of the present disclosure also provides a model testing apparatus, the model testing apparatus of the embodiment may be a fourth device. As shown in FIG. 10, the model training apparatus includes: a generating unit 1001, a sending unit 1002, and a receiving unit 1003.

The generating unit 1001 is configured to generate a testing request, where the testing request carries a testing attribute, the testing attribute includes: testing data and testing indication information, the testing indication information is used to indicate an association relationship between multiple models and a model generation strategy.

The sending unit 1002 is configured to send the testing request to a third device of a management service producer, where the testing request is used to indicate the third device to acquire a fusion model requested for testing.

The receiving unit 1003 is configured to receive a testing result sent by the third device, where the testing result includes a performance of the fusion model, the testing result is obtained by the third device using testing data to test the fusion model based on the testing indication information.

Optionally, the testing indication information includes: at least one of information to indicate whether to test the fusion model, association information between the multiple models, a multi-model fusion algorithm, a fusion model generation strategy, or a fusion model integration mode.

It should be noted here that the above apparatus provided by the present disclosure can implement all the method steps implemented by the fourth device in the method embodiments above, and can achieve the same technical effect, and parts and beneficial effects in the embodiment of the present disclosure which is the same of the method embodiments will not be detailed here.

It should be noted that the division of units in the embodiment of the present disclosure is schematic and is only a logical function division, and there can be another division mode in actual implementation. In addition, the functional units in various embodiments of the present disclosure may be integrated in a single processing unit, the units may exist physically separately, or two or more units may be integrated in a single unit. The integrated unit can be realized either in the form of hardware or in the form of software functional unit.

Integrated units can be stored in a processor-readable storage medium if implemented in the form of software functional units and sold or used as stand-alone products. Based on this understanding, the technical scheme of the present disclosure may be substantially or a part that contributed to the prior art or all or part of the technical scheme may be embodied in the form of a software product, the computer software product is stored in a storage medium and includes some instructions for making a computer device (which may be a personal computer, a server, a computer, or a Network device, etc.) or processor (processor) performs all or part of the steps of each embodiment method of the present disclosure. The aforementioned storage medium includes: U disk, mobile hard disk, read-only memory (Read-Only Memory, ROM), random access memory (Random Access Memory, RAM), disk or disc and other medium that can store program code.

An embodiment of the present disclosure provides a processor-readable storage medium, where the processor-readable storage medium stores a computer program, the computer program is used to enable a processor to perform any one of the methods provided by the embodiment of the present disclosure with respect to the first device through the fourth device. The processor can implement all the method steps implemented by the first device to the fourth device in the above method embodiments, and can achieve the same technical effect. Parts and beneficial effects in the embodiment of the present disclosure which is the same of the method embodiments will not be detailed here.

The processor-readable storage medium can be any available medium or data storage device that the processor can access. The processor-readable storage medium includes, but is not limited to, magnetic memory (e.g., floppy disk, hard disk, tape, magnetic disc (MO), etc.), optical memory (e.g., CD, DVD, BD, HVD, etc.), and semiconductor memory (e.g., ROM, EPROM, EEPROM, NAND FLASH (NAND FLASH), solid state drive (SSD)).

Persons skilled in the art should understand that embodiments of the present disclosure may be provided as methods, systems, or computer program products. Accordingly, the present disclosure may take the form of a full hardware embodiment, a full software embodiment, or a combination of software and hardware aspects. Further, the present disclosure may take the form of a computer program product implemented on one or more computer available storage medium (including but not limited to disk memory and optical memory, etc.) which contain computer available program code.

The present disclosure is described by reference to flow diagrams and/or block diagrams of methods, apparatus, and computer program products based on embodiments of the present disclosure. It should be understood that each process and/or block in a flow diagram and/or block diagram, and a combination of processes and/or blocks in a flow diagram and/or block diagram, can be implemented by computer-executable instructions. These computer-executable instructions may be provided to a processor of a general-purpose computer, a special-purpose computer, an embedded processor, or other programmable data processing device to produce a machine, an apparatus that causes instructions executed by the processor of a computer or other programmable data processing device to produce a function specified in one process or multiple processes of the flow diagram and/or in one block or multiple blocks in the block diagram.

These processor-executable instructions may also be stored in processor-readable memory capable of directing a computer or other programmable data processing device to work in a particular manner, such that the instructions stored in the processor-readable memory produce manufactured goods including instruction apparatus, the instruction apparatus implements a function specified in one process or multiple processes of the flow diagram and/or in one block or multiple blocks in the block diagram.

These processor executable instructions may also be loaded onto a computer or other programmable data processing device, enabling a series of operational steps to be performed on the computer or other programmable device to produce computer-implemented processing. So that, instructions executed on a computer or other programmable device provide steps to implement a function specified in one process or multiple processes of the flow diagram and/or in one block or multiple blocks in the block diagram.

Obviously, persons skilled in the art may make various changes and variations to the present disclosure without deviating from the spirit and scope of the present disclosure. Thus, to the extent that these modifications and variations of the present disclosure are within the scope of the claims of the present disclosure and their equivalents, the present disclosure is also intended to include such modifications and variations.

## Claims

1. A model training method, applied to a first device of a management service producer, wherein the model training method comprises:
receiving a training request of a second device of a management service consumer, wherein the training request carries a training attribute, the training attribute comprises: training indication information, the training indication information is used to indicate an association relationship between multiple models and a model generation strategy; and
configuring the training attribute in the first device, and jointly training the multiple models to obtain a training result according to the training indication information and multiple model identifiers, wherein the multiple model identifiers are contained in the training attribute or the multiple model identifiers are generated by the first device, the training result comprises a trained fusion model.

2. The model training method according to claim 1, wherein the training indication information comprises: at least one of information to indicate whether to train a fusion model, association information between the multiple models, a multi-model fusion algorithm, a fusion model generation strategy, or a fusion model integration mode.

3. The model training method according to claim 2, wherein if the training indication information comprises the fusion model generation strategy, the fusion model generation strategy comprises: at least one of a model initialization mode, a number of model training rounds, a loss function corresponding to a model, or a network structure of the model.

4. The model training method according to claim 2, wherein if the training indication information comprises the fusion model integration mode, the fusion model integration mode comprises: at least one of a weighted or direct average method, a voting method, or a learning method.

5. A model testing method, applied to a third device of a management service producer, wherein the model testing method comprises:
receiving a testing request of a fourth device of a management service consumer, wherein the testing request carries a testing attribute, the testing attribute comprises: testing data and testing indication information, the testing indication information is used to indicate an association relationship between multiple models and a model generation strategy;
acquiring a fusion model requested for testing according to the testing request;
based on the testing indication information, using testing data to test the fusion model to obtain a testing result, wherein the testing result comprises a performance of the fusion model; and
sending the testing result to the fourth device.

6. The model testing method according to claim 5, wherein the testing indication information comprises: at least one of information to indicate whether to test the fusion model, association information between the multiple models, a multi-model fusion algorithm, a fusion model generation strategy, or a fusion model integration mode.

7. A model training method, applied to a second device of a management service consumer, wherein the model training method comprises:
generating a training request, wherein the training request carries a training attribute, the training attribute comprises: training indication information, the training indication information is used to indicate an association relationship between multiple models corresponding to multiple model identifiers and a model generation strategy during training of the multiple models, the multiple model identifiers are contained in the training attribute or the multiple model identifiers are generated by a first device of a management service producer; and
sending the training request to the first device of the management service producer.

8. The model training method according to claim 7, wherein the training indication information comprises: at least one of information to indicate whether to train a fusion model, association information between the multiple models, a multi-model fusion algorithm, a fusion model generation strategy, or a fusion model integration mode.

9. The model training method according to claim 7, wherein if the training indication information comprises the fusion model generation strategy, the fusion model generation strategy comprises: at least one of a model initialization mode, the number of model training rounds, a loss function corresponding to a model, or a network structure of the model.

10. The model training method according to claim 7, wherein if the training indication information comprises the fusion model integration mode, the fusion model integration mode comprises: at least one of a weighted or direct average method, a voting method, or a learning method.

11. A model testing method, applied to a fourth device of a management service consumer, wherein the model testing method comprises:
generating a testing request, wherein the testing request carries a testing attribute, the testing attribute comprises: testing data and testing indication information, the testing indication information is used to indicate an association relationship between multiple models and a model generation strategy;
sending the testing request to a third device of a management service producer, wherein the testing request is used to indicate the third device to acquire a fusion model requested for testing; and
receiving a testing result sent by the third device, wherein the testing result comprises a performance of the fusion model, the testing result is obtained by the third device using testing data to test the fusion model based on the testing indication information.

12. The model testing method according to claim 11, wherein the testing indication information comprises: at least one of information to indicate whether to test the fusion model, association information between the multiple models, a multi-model fusion algorithm, a fusion model generation strategy, or a fusion model integration mode.

13. A model training apparatus, applied to a first device of a management service producer, and comprising a memory, a transceiver, and a processor:
the memory is configured to store a computer program;
the transceiver is configured to send and receive data under control of the processor;
the processor is configured to read the computer program in the memory and perform the following operations:
receiving a training request of a second device of a management service consumer, wherein the training request carries a training attribute, the training attribute comprises: training indication information, the training indication information is used to indicate an association relationship between multiple models and a model generation strategy; and
configuring the training attribute in the first device, and jointly training the multiple models to obtain a training result according to the training indication information and multiple model identifiers, wherein the multiple model identifiers are contained in the training attribute or the multiple model identifiers are generated by the first device, the training result comprises a trained fusion model.

14. The model training apparatus according to claim 13, wherein the training indication information comprises: at least one of information to indicate whether to train a fusion model, association information between the multiple models, a multi-model fusion algorithm, a fusion model generation strategy, or a fusion model integration mode.

15. The model training apparatus according to claim 14, wherein if the training indication information comprises the fusion model generation strategy, the fusion model generation strategy comprises: at least one of a model initialization mode, the number of model training rounds, a loss function corresponding to a model, or a network structure of the model.

16. The model training apparatus according to claim 14, wherein if the training indication information comprises the fusion model integration mode, the fusion model integration mode comprises: at least one of a weighted or direct average method, a voting method, or a learning method.

17. A model testing apparatus, applied to a third device of a management service producer, and comprising a memory, a transceiver, and a processor:
the memory is configured to store a computer program;
the transceiver is configured to send and receive data under control of the processor;
the processor is configured to read the computer program in the memory and perform the following operations:
receiving a testing request of a fourth device of a management service consumer, wherein the testing request carries a testing attribute, the testing attribute comprises: testing data and testing indication information, the testing indication information is used to indicate an association relationship between multiple models and a model generation strategy;
acquiring a fusion model requested for testing according to the testing request;
based on the testing indication information, using testing data to test the fusion model to obtain a testing result, wherein the testing result comprises a performance of the fusion model; and
sending the testing result to the fourth device.

18. The model testing apparatus according to claim 17, wherein the testing indication information comprises: at least one of information to indicate whether to test the fusion model, association information between the multiple models, a multi-model fusion algorithm, a fusion model generation strategy, or a fusion model integration mode.

19. A model training apparatus, applied to a second device of a management service consumer, and comprising:
a generating unit, configured to generate a training request, wherein the training request carries a training attribute, the training attribute comprises: training indication information, the training indication information is used to indicate an association relationship between multiple models corresponding to multiple model identifiers and a model generation strategy during training of the multiple models, the multiple model identifiers are contained in the training attribute or the multiple model identifiers are generated by a first device of a management service producer; and
a sending unit, configured to send the training request to the first device.

20. The model training apparatus according to claim 19, wherein the training indication information comprises: at least one of information to indicate whether to train a fusion model, association information between the multiple models, a multi-model fusion algorithm, a fusion model generation strategy, or a fusion model integration mode.

21. The model training apparatus according to claim 20, wherein if the training indication information comprises the fusion model generation strategy, the fusion model generation strategy comprises: at least one of a model initialization mode, the number of model training rounds, a loss function corresponding to a model, or a network structure of the model.

22. The model training apparatus according to claim 20, wherein if the training indication information comprises the fusion model integration mode, the fusion model integration mode comprises: at least one of a weighted or direct average method, a voting method, or a learning method.

23. A model testing apparatus, applied to a fourth device of a management service consumer, and comprising:
a generating unit, configured to generate a testing request, wherein the testing request carries a testing attribute, the testing attribute comprises: testing data and testing indication information, the testing indication information is used to indicate an association relationship between multiple models and a model generation strategy;
a sending unit, configured to send the testing request to a third device of a management service producer, wherein the testing request is used to indicate the third device to acquire a fusion model requested for testing; and
a receiving unit, configured to receive a testing result sent by the third device, wherein the testing result comprises a performance of the fusion model, the testing result is obtained by the third device using testing data to test the fusion model based on the testing indication information.

24. The model testing apparatus according to claim 23, wherein the testing indication information comprises: at least one of information to indicate whether to train the fusion model, association information between the multiple models, a multi-model fusion algorithm, a fusion model generation strategy, or a fusion model integration mode.

25. A processor-readable storage medium, wherein the processor-readable storage medium stores a computer program, the computer program is used to enable the processor to perform the model training method according to any one of claims 1 to 4 and 7 to10, or the model testing method according to any one of claims 5 to 6 and 11 to 12.
